# EUROPEAN PATENT SPECIFICATION

(11) **EP 3 728 525 B1**
(45) Date of publication and mention of the grant of the patent: **23.11.2022**
(21) Application number: 18891824.7
(22) Date of filing: 11.12.2018
(51) Int. Cl.: C10L 9/08, C02F 11/06, C02F 11/10, C02F 11/18, C10L 5/40, C02F 11/08

(54) **OXIDATION AND SUBSEQUENT HYDROTHERMAL CARBONIZATION OF SLUDGE**
OXIDATION UND ANSCHLIESSENDE HYDROTHERMALE KARBONISIERUNG VON SCHLAMM
OXYDATION ET CARBONISATION HYDROTHERMALE ULTÉRIEURE DE BOUES

(30) Priority: 21.12.2017 SE 1751623
(43) Date of publication of application: 28.10.2020
(73) Proprietor: C-Green Technology AB, 170 63 Solna (SE)
(72) Inventor: LUNDQVIST, Fredrik, 178 40 Ekerö (SE); ODÉN, Erik, 182 78 Stocksund (SE); ÖHMAN, Fredrik, 802 70 Gävle (SE)
(74) Representative: Kransell & Wennborg KB
(86) International application number: PCT/SE2018/051291
(87) International publication number: WO 2019/125275

(56) References cited:
- EP-A1- 2 206 688
- WO-A1-2009/127727
- WO-A1-2017/003358
- DE-B3-102010 062 833
- US-A1- 2012 103 040
- Gotthart Riedel et al: "Combination of hydrothermal carbonization and wet oxidation of various biomasses", Chemical Engineering Journal, vol. 279, 2015, pages 715-724, XP055448918,
- M. TOUFIQ REZA et al.: "Wet air oxidation of hydrothermal carbonization (HTC) process liquid", ACS Sustainable Chemistry & Engineering, vol. 4, no. 6, 14 May 2016 (2016-05-14), pages 3250-3254, XP055554112,

## Description

### TECHNICAL FIELD

The present disclosure relates to a method of hydrothermal carbonization of sludge, in particular municipal or industrial sludge from a wastewater treatment plant.

### BACKGROUND

Sludge is typically what remains after wastewater treatment in municipal or industrial wastewater treatment plants. Municipal wastewater treatment plants treat wastewater from cities while industrial wastewater treatment plants treat water effluents from different industrial processes, for example pulp and paper mills, industrial food production facilities etc. Animal farming is also a considerable source of wastewater and sludge, for example large-scale pig farming. Embodiments of the present disclosure will be useful in all these areas.

The technologies for wastewater treatment are similar on a general level, but include specific solutions depending on the character of the waste streams to be treated, basic design, local requirements and environmental concerns. In larger plants in Sweden, the wastewater treatment process often comprises mechanical pretreatment followed by primary (settling) and secondary (aerobic) treatment steps. In some cases different forms of tertiary treatment is also applied to remove remaining problematic substances, for example drug residues, toxic organic substances etc., in the treated water. In smaller plants one or more of these stages may often be omitted.

Almost all wastewater treatment plants in use generate sludge that needs to be handled. The sludge is either recovered directly from the plant after dewatering (aerobic sludge) or first treated anaerobically for biogas production where part of the sludge is digested and the remainder is recovered as anaerobic sludge.

Wastewater treatment plants world wide produce several hundred millions metric tonnes of sludge every year and the amount is rapidly growing. In Sweden, the total sludge volume in tons of dry solids per year (tDS/y) was reported to be 250 000 in 2010 and the current figure is estimated to be the same or higher. Sludge handling is thus an enormous challenge for society, and present solutions are associated with high cost and frequently also a negative environmental impact.

Starting from 1986, the European Union has adopted several directives regulating the treatment and disposal of waste water sludge, addressing different aspects such as the use of sludge as landfill, the recovery of phosphorus, incineration of sludge etc. The various directives are reflected in national legislation in the individual member states, and for example in Sweden, the disposal of sludge in landfill has been prohibited since 2005. Today, the main uses for wastewater sludge are fertilization in agriculture and forestry/silviculture, mixing into plant soil for ground construction projects and the coverage and restoration of landfills, incineration with energy recovery, recovery of chemicals and the production of fertilizers, and finally landfill, however provided that the sludge has undergone specific pretreatment, such as composting.

Incineration of the sludge, with energy recovery and suitable treatment of flue gases and ashes to destroy harmful chemicals and safely handle heavy metals, remains an attractive alternative. The exact composition of the sludge however depends on the composition of the incoming wastewater and the type of wastewater treatment plant. Sludge with high concentrations of organic and/or biological components is generally difficult to dewater. The water content is frequently so high that the net heating value if incinerated in a power plant is very low or even negative and the addition of support fuels, often fossil fuel, may be necessary.

C-Green Technology AB has developed a process for treatment of sludge involving a step of hydrothermal carbonization (HTC). Phosphorus can be extracted either from the biofuel before combustion or from ash after combustion.

WO 2009/127727 describes a process for converting biomass to coal-like material using hydrothermal carbonisation, possibly with an eventual wet oxidation step.

### SUMMARY

The operation of many hydrothermal carbonization (HTC) systems require a supply of external energy, e.g. in the form of electricity or gas. The present inventors have found that the need for continuous supply of external energy in HTC treatment of sludge can be eliminated by adding an oxidation agent to a pre-heated sludge prior to the HTC reaction. The addition of the oxidation agent results in a partial wet oxidation of the sludge. The partial wet oxidation is exothermal and generates enough heat to reach the desired temperature of the HTC reaction. This simple form of oxidation is relatively easy and inexpensive to implement.

A benefit adding the oxidation agent to a preheated sludge rather than to a non-heated sludge is that a higher temperature results in a faster wet oxidation process (the rate to the wet oxidation is temperature-dependent). At temperatures above 120 °C, a higher temperature also increases the solubility of oxygen gas in the sludge, which further facilitates the wet oxidation (when oxygen gas is the oxidation agent). Further, the viscosity of the sludge is substantially lower at higher temperatures, which allows for an efficient mixing with the oxidation agent.

There is thus provided a method of hydrothermal carbonization of a sludge, comprising the steps of:
a) preheating the sludge to obtain a preheated sludge;
b) adding an oxidizing agent to the preheated sludge; and
c) subjecting the sludge from step b) to hydrothermal carbonization (HTC) in a reactor to obtain a HTC-treated sludge.

The oxidizing agent is preferably oxygen gas. "Oxygen gas" refers to a gas comprising at least 80 % oxygen by volume, preferably at least 95 % oxygen by volume. Consequently, "adding oxygen gas" in step b) does not cover adding air (as the oxygen content of air is only 21 % by volume). A benefit of using oxygen gas instead of air is that less inert gas is added to the reactor. Another benefit is a more efficient wet oxidation reaction.

As understood by the skilled person, the method is a continuous method.

The temperature of the preheated sludge to which the oxidizing agent is added in step b) is normally at least 120 °C and preferably at least 145 °C, such as 145-195 °C. More preferably, it is at least 150 °C, such as 150-190 °C. Most preferably, it is at least 165 °C, such as 165-190 °C.

The sludge of the present disclosure is preferably a municipal or industrial sludge from a wastewater treatment plant.

The dry solids content (also referred to as "Total Solids") of the sludge is typically 1-35 %, such as 2-35 %, such as 3-32 %. If the sludge is anaerobic sludge, the dry solids content is normally 13-32 %. If the sludge is aerobic sludge, the dry solids content is typically 5-15 %. The ash content is typically 10-75 %, such as 12-50 %, such as 30-50 %, of the dry weight of the sludge. The higher heating value (HHV) of the sludge is typically 3.5-21 MJ/kg (dry weight), such as 6-17 MJ/kg (dry weight).

The wet oxidation of the present disclosure is partial in the sense that it does not consume the whole HHV of the sludge. Typically it consumes less than 50 % of the HHV of the sludge and preferably it consumes 5-20 %, such as 6-15 %, of the HHV of the sludge. The amount of oxidation agent added in step b) may be adapted accordingly.

The present disclosure facilitates the separation of phosphorus (P). Accordingly, the sludge of the present disclosure preferably comprises phosphorus, e.g. in an amount of 0.5-9 % of the dry weight of the sludge, such as 1-9 % of the dry weight of the sludge, such as 1.5-9 % of the dry weight of the sludge.

Further, the treated sludge is used as a fuel for the wet-oxidation process. The final HTC coal is also typically used as a fuel. Therefore, the sludge of the present disclosure preferably comprises carbon (C), e.g. in an amount of 9-46 % of the dry weight of the sludge, such as 20-46 % of the dry weight of the sludge.

The wet oxidation of the present disclosure does not require a separate reactor. Instead, it is sufficient that the fraction is mixed with the oxidation agent, e.g. using an oxygen gas mixer. Accordingly, in one embodiment, no reactor separate from the reactor of step c) is used for the reaction between the oxidizing agent and preheated sludge. The equipment needed for such an embodiment may be relatively simple and thus inexpensive. To achieve better process control, it may however be beneficial to allow the sludge to pass through a reactor for wet oxidation between step b) and step c). The retention time in such a reactor is typically shorter than the retention in the reactor of step c). For example, the retention time in the reactor for wet oxidation may be 10-60 min, such as 20-40 min. Accordingly, the volume of the reactor for wet oxidation is typically smaller than the volume of the reactor of step c). For example, the volume of the reactor for wet oxidation may be 10-50 %, such as 20-40 %, of the volume of the reactor of step c).

When the oxidizing agent is oxygen gas, it may be added in an amount of 60-260 kg per tonne of dry sludge processed by the method, preferably 100-200 kg per tonne of dry sludge processed by the method, more preferably 110-150 kg per tonne of dry sludge processed by the method.

The HTC-treated sludge from step c) may be cooled by flashing. Such flashing provides at least one steam fraction that is/are preferably used in the preheating of step a). In one embodiment, the flashing provides at least two, such as at least three, steam fractions of different temperatures that are used for sequential heating of the sludge in the preheating of step a).

For such an embodiment, an arrangement may be used, which arrangement comprises:
- a flashing arrangement for subjecting the HTC-treated sludge from step c) to flashing to obtain a cooled fraction and the at least one steam fraction; and
- a steam routing arrangement for routing the at least one steam fraction to a preheating arrangement for the preheating of step a).

The flashing arrangement may comprise at least two, such as at least three, flashing vessels arranged in series to provide steam fractions of different temperatures. Further, the preheating arrangement may comprise at least two, such as at least three, steam mixers, such as venturi mixers, arranged in series. The steam routing arrangement preferably connects the flashing vessels to the steam mixers such that the sludge can be preheated stepwise.

The temperature of the HTC-treated sludge in step c) is 180-250 °C, preferably 180-230 °C and more preferably 190-225 °C.

The step of wet oxidation is carried out as the preheating is not sufficient for the sludge to reach the temperature of the HTC treatment in the reactor. The temperature of the HTC-treated sludge in step c) is normally at least 20 °C higher (such as 20-65 °C higher) and preferably at least 30 °C higher (such as 30-65 °C higher) than the temperature of the preheated sludge to which the oxidizing agent is added in step b).

The average retention time in the reactor of step c) is typically 0.25-8 h and preferably 0.5-2 h.

### BRIEF DESCRIPTION OF THE DRAWINGS

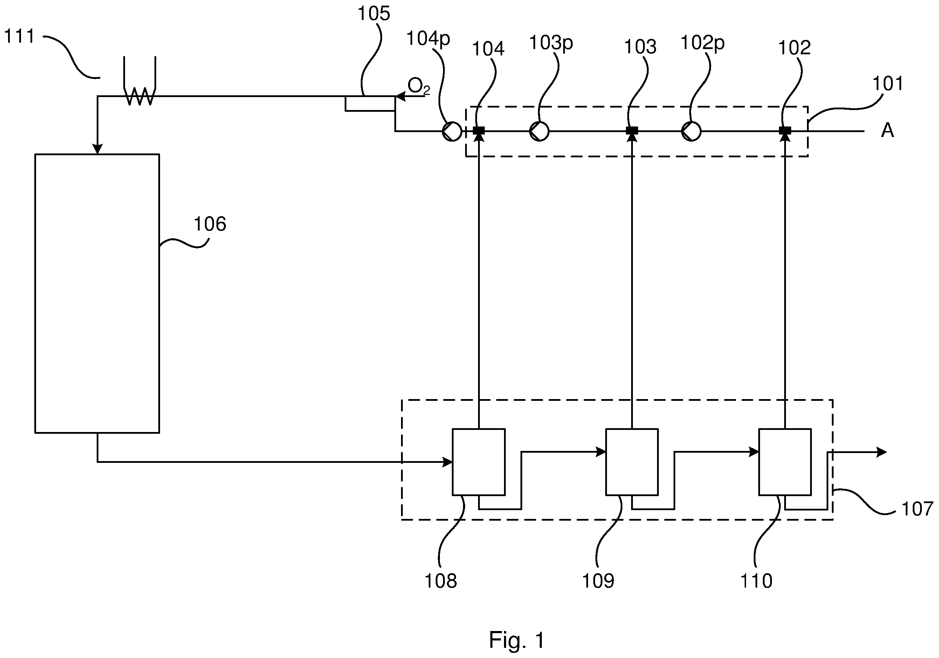

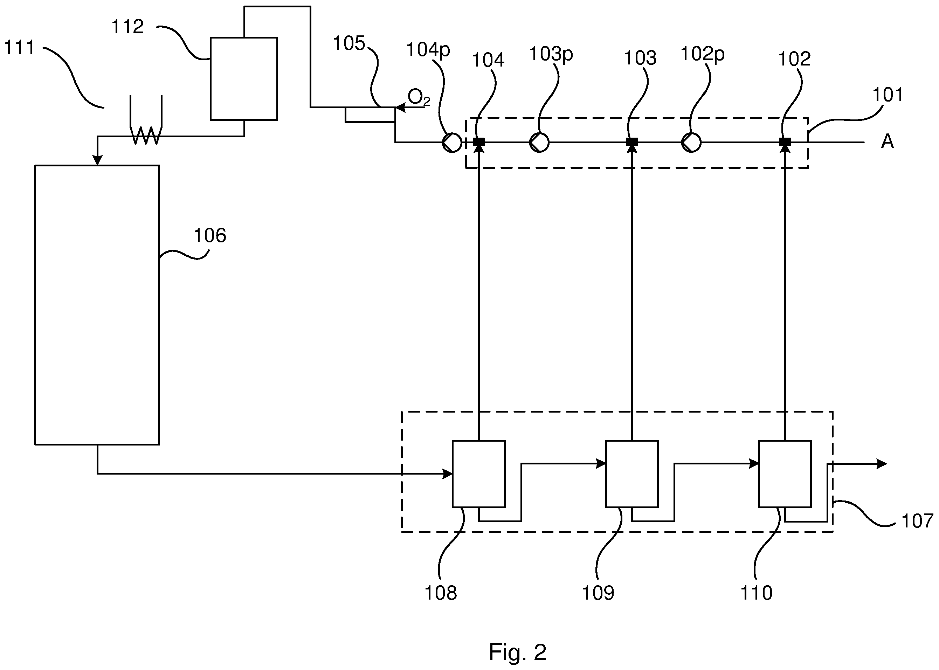

Figs. 1 and 2 illustrate different exemplary embodiments of a method according to the present disclosure.

### DETAILED DESCRIPTION

A first exemplary embodiment of a method according to the present disclosure is schematically illustrated in Fig. 1. A sludge is received (A) from a source, which can be a municipal wastewater treatment plant, an industrial process, or an installation in agriculture or animal farming. The sludge may be received directly from the plant or from a storage tank that forms part of the system. The sludge typically has an initial temperature of about 30°C and a dry matter content of about 30 %. After optional initial heating (not shown), e.g. by a liquid stream from the same process/system, the sludge is preheated in a preheating arrangement 101. The preheating is preferably carried out by stepwise additions of steam, e.g. in a first 102, a second 103 and a third 104 steam mixer arranged in series. Downstream each steam mixer 102, 103, 104, a pump 102p, 103p, 104p is arranged. After the preheating arrangement 101, a preheated sludge having a temperature of about 175 °C is obtained.

Oxygen gas is added to the preheated sludge in an oxygen gas mixer 105 to achieve partial wet oxidation of the preheated sludge. The oxygen gas mixer is connected to an oxygen tank (not shown). The amount of oxygen gas may be about 130 kg per tonne of dry sludge processed in the system. The wet oxidation is not instantaneous. Rather, it will be ongoing when the sludge flows downstream the oxygen gas mixer 105.

After the addition of oxygen, the sludge is routed to a reactor 106 for hydrothermal carbonization (HTC) of the sludge. In an upstream section of the reactor 106, the wet oxidation reactions maybe ongoing, which means that the temperature is typically lower in the upstream section of the reactor 106 than in a downstream section of the reactor 106. In the downstream section of the reactor, the temperature is typically within the range of 205-215 °C.

The HTC-treated sludge from the reactor 106 is subjected to flashing in a flashing arrangement 107, which produces at least one steam fraction that is used to preheat the sludge in the preheating arrangement 101. Preferably, the flashing arrangement 107 comprises several flashing vessels arranged in series to produce steam fractions of different temperatures. For example, the flashing arrangement 107 may comprise: a first flashing vessel 108 that produces a steam fraction of relatively high temperature that is routed to the third steam mixer 104 of the preheating arrangement 101; a second flashing vessel 109 that produces a steam fraction of medium temperature that is routed to the second steam mixer 103 of the preheating arrangement 101; and a third flashing vessel 110 that produces a steam fraction of relatively low temperature that is routed to the first steam mixer 102 of the preheating arrangement 101.

The cooled slurry obtained downstream the flashing arrangement 107 is dewatered (not shown) such that at least one liquid stream (that can be used for initial heating and/or dilution of incoming sludge) and a thick fraction comprising HTC coal are obtained.

The system 100 may comprise a heater 111 using external heat, such as an electrical heater, for cold starting the process. The heater 111 is preferably arranged downstream the oxygen gas mixer, but upstream the reactor 106.

A second exemplary embodiment of a system according to the present disclosure is schematically illustrated in Fig. 2. A sludge is received (A) from a source, which can be a municipal wastewater treatment plant, an industrial process, or an installation in agriculture or animal farming. The sludge may be received directly from the plant or from a storage tank that forms part of the system. The sludge typically has an initial temperature of about 30°C and a dry matter content of about 30 %. After optional initial heating (not shown), e.g. by a liquid stream from the same process/system, the sludge is preheated in a preheating arrangement 101. The preheating is preferably carried out by stepwise additions of steam, e.g. in a first 102, a second 103 and a third 104 steam mixer arranged in series. Downstream each steam mixer 102, 103, 104, a pump 102p, 103p, 104p is arranged. After the preheating arrangement 101, a preheated sludge having a temperature of about 175 °C is obtained.

Oxygen gas is added to the preheated sludge in an oxygen gas mixer 105 to achieve partial wet oxidation of the preheated sludge. The oxygen gas mixer is connected to an oxygen tank (not shown). The amount of oxygen gas may be about 130 kg per tonne of dry sludge processed in the system. The wet oxidation is not instantaneous. Therefore, a reactor 112 for wet oxidation is arranged downstream the oxygen gas mixer 105. The retention time of the sludge in such a reactor 112 may be about 30 min, which is considered to be sufficient for the wet oxidation reactions.

The temperature of the wet-oxidized sludge from the reactor 112 for wet oxidation is typically 200-215 °C. This wet-oxidized sludge is routed to a reactor 106 for hydrothermal carbonization (HTC) of the sludge. The temperature may vary slightly between different positions in the HTC reactor 106 because of exothermic reactions (e.g. the HTC reactions and possibly oxidations by remaining oxygen) and heat losses. The retention time of the sludge in the HTC reactor 106 maybe about 1.5 h, i.e. about three times longer than the retention time in the reactor 112 for wet oxidation. Accordingly, the volume of the HTC reactor may be three times greater than the volume of the reactor 106 for wet oxidation.

The HTC-treated sludge from the reactor 106 is subjected to flashing in a flashing arrangement 107, which produces at least one steam fraction that is used to preheat the sludge in the preheating arrangement 101. Preferably, the flashing arrangement 107 comprises several flashing vessels arranged in series to produce steam fractions of different temperatures. For example, the flashing arrangement 107 may comprise: a first flashing vessel 108 that produces a steam fraction of relatively high temperature that is routed to the third steam mixer 104 of the preheating arrangement 101; a second flashing vessel 109 that produces a steam fraction of medium temperature that is routed to the second steam mixer 103 of the preheating arrangement 101; and a third flashing vessel 110 that produces a steam fraction of relatively low temperature that is routed to the first steam mixer 102 of the preheating arrangement 101.

The cooled slurry obtained downstream the flashing arrangement 107 is dewatered (not shown) such that at least one liquid stream (that can be used for initial heating and/or dilution of incoming sludge) and a thick fraction comprising HTC coal are obtained.

The system 100 may comprise a heater 111 using external heat, such as an electrical heater, for cold starting the process. The heater 111 is preferably arranged downstream the oxygen gas mixer, but upstream the reactor 106.

## Claims

1. A method of hydrothermal carbonization of a sludge, comprising the steps of:
a) preheating the sludge to obtain a preheated sludge;
b) adding an oxidizing agent, such as oxygen gas, to the preheated sludge; and
c) subjecting the sludge from step b) to hydrothermal carbonization (HTC) in a reactor to obtain a HTC-treated sludge.

2. The method according to claim 1, further comprising the step:
d) subjecting the HTC-treated sludge from step c) to flashing to obtain at least one steam fraction and a cooled fraction, wherein the at least one steam fraction is used in the preheating of step a).

3. The method according to any one of the preceding claims, wherein the sludge passes through a reactor for wet oxidation between step b) and step c).

4. The method of claim 3, wherein the volume of the reactor for wet oxidation is smaller than the volume of the reactor of step c).

5. The method of claim 4, wherein the volume of the reactor for wet oxidation is 10-50 % of the volume of the reactor of step c).

6. The method of claim 5, wherein the volume of the reactor for wet oxidation is 20-40 % of the volume of the reactor of step c).

7. The method according to any one of the preceding claims, wherein the sludge is a municipal or industrial sludge from a wastewater treatment plant.

8. The method according to any one of the preceding claims, wherein the temperature of the HTC-treated sludge in step c) is 180-250 °C, preferably 180-230 °C and more preferably 190-225 °C.

9. The method according to any one of the preceding claims, wherein the temperature of the HTC-treated sludge in step c) is at least 20 °C higher, preferably at least 30 °C higher, than the temperature of the preheated sludge to which the oxidizing agent is added in step b).

10. The method according to any one of the preceding claims, wherein the temperature of the preheated sludge to which the oxidizing agent is added in step b) is 145-195 °C, such as 150-190 °C, preferably 165-190 °C.

11. The method according to any one of the preceding claims, wherein the average retention time in the reactor of step c) is 0.25-8 h, preferably 0.5-2 h.

12. The method according to any one of the preceding claims, wherein the amount of oxidizing agent added in step b) is such that wet oxidation reactions reduces the higher heating value (HHV) of the sludge by 5-49 %, preferably 5-20 %, more preferably 6-15 %.

## Patentansprüche

1. Verfahren zur hydrothermalen Karbonisierung eines Schlamms, umfassend die Schritte:
a) Vorheizen des Schlamms, um einen vorgeheizten Schlamm zu erhalten;
b) Zugeben eines Oxidationsmittels, wie Sauerstoffgas, zu dem vorgeheizten Schlamm; und
c) Unterziehen des Schlamms aus Schritt b) hydrothermaler Karbonisierung (HTC) in einem Reaktor, um einen HTC-behandelten Schlamm zu erhalten.

2. Verfahren nach Anspruch 1, des Weiteren umfassend den Schritt:
d) Unterziehen des HTC-behandelten Schlamms aus Schritt c) Blitzverdampfen, um mindestens eine Dampffraktion und eine gekühlte Fraktion zu erhalten, wobei die mindestens eine Dampffraktion beim Vorheizen von Schritt a) verwendet wird.

3. Verfahren nach einem der vorhergehenden Ansprüche, wobei der Schlamm einen Reaktor zur Nassoxidation zwischen Schritt b) und Schritt c) durchläuft.

4. Verfahren nach Anspruch 3, wobei das Volumen des Reaktors zur Nassoxidation kleiner als das Volumen des Reaktors von Schritt c) ist.

5. Verfahren nach Anspruch 4, wobei das Volumen des Reaktors zur Nassoxidation 10 bis 50 % des Volumens des Reaktors von Schritt c) beträgt.

6. Verfahren nach Anspruch 5, wobei das Volumen des Reaktors zur Nassoxidation 20 bis 40 % des Volumens des Reaktors von Schritt c) beträgt.

7. Verfahren nach einem der vorhergehenden Ansprüche, wobei der Schlamm ein kommunaler oder industrieller Schlamm aus einer Abwasserbehandlungsanlage ist.

8. Verfahren nach einem der vorhergehenden Ansprüche, wobei die Temperatur des HTC-behandelte Schlamms in Schritt c) 180 bis 250 °C, vorzugsweise 180 bis 230 °C und bevorzugter 190 bis 225 °C beträgt.

9. Verfahren nach einem der vorhergehenden Ansprüche, wobei die Temperatur des HTC-behandelten Schlamms in Schritt c) mindestens 20 °C höher, vorzugsweise mindestens 30 °C höher als die Temperatur des vorgeheizten Schlamms ist, dem in Schritt b) das Oxidationsmittel zugegeben wird.

10. Verfahren nach einem der vorhergehenden Ansprüche, wobei die Temperatur des vorgeheizten Schlamms, dem in Schritt b) das Oxidationsmittel zugegeben wird, 145 bis 195 °C, wie 150 bis 190 °C, vorzugsweise 165 bis 190 °C beträgt.

11. Verfahren nach einem der vorhergehenden Ansprüche, wobei die durchschnittliche Verweilzeit in dem Reaktor von Schritt c) 0,25 bis 8 Stunden, vorzugsweise 0,5 bis 2 Stunden beträgt.

12. Verfahren nach einem der vorhergehenden Ansprüche, wobei die Menge an in Schritt b) zugegebenem Oxidationsmittel so ist, dass Nassoxidationsreaktionen den höheren Heizwert (HHV) des Schlamms um 5 bis 49 %, vorzugsweise 5 bis 20 %, bevorzugter 6 bis 15 % reduzieren.

## Revendications

1. Procédé de carbonisation hydrothermale d'une boue, comprenant les étapes de :
a) préchauffage de la boue pour obtenir une boue préchauffée ;
b) ajout d'un agent oxydant, tel que du gaz d'oxygène, à la boue préchauffée ; et
c) soumission de la boue de l'étape b) à une carbonisation hydrothermale (HTC) dans un réacteur pour obtenir une boue traitée par HTC.

2. Procédé selon la revendication 1, comprenant en outre l'étape :
d) soumission de la boue traitée par HTC de l'étape c) à une distillation par détente pour obtenir au moins une fraction de vapeur et une fraction refroidie, l'au moins une fraction de vapeur étant utilisée dans le préchauffage de l'étape a) .

3. Procédé selon l'une quelconque des revendications précédentes, la boue passant à travers un réacteur pour une oxydation par voie humide entre l'étape b) et l'étape c).

4. Procédé selon la revendication 3, le volume du réacteur pour l'oxydation par voie humide étant plus petit que le volume du réacteur de l'étape c).

5. Procédé selon la revendication 4, le volume du réacteur pour l'oxydation par voie humide étant 10 à 50 % du volume du réacteur de l'étape c).

6. Procédé selon la revendication 5, le volume du réacteur pour l'oxydation par voie humide étant 20 à 40 % du volume du réacteur de l'étape c).

7. Procédé selon l'une quelconque des revendications précédentes, la boue étant une boue municipale ou industrielle provenant d'une installation de traitement des eaux usées.

8. Procédé selon l'une quelconque des revendications précédentes, la température de la boue traitée par HTC dans l'étape c) étant de 180 à 250 °C, préférablement de 180 à 230 °C et plus préférablement de 190 à 225 °C.

9. Procédé selon l'une quelconque des revendications précédentes, la température de la boue traitée par HTC dans l'étape c) étant supérieure d'au moins 20 °C, préférablement supérieure d'au moins 30 °C, à la température de la boue préchauffée à laquelle l'agent oxydant est ajouté dans l'étape b).

10. Procédé selon l'une quelconque des revendications précédentes, la température de la boue préchauffée à laquelle l'agent oxydant est ajouté dans l'étape b) étant de 145 à 195 °C, telle que de 150 à 190 °C, préférablement de 165 à 190 °C.

11. Procédé selon l'une quelconque des revendications précédentes, le temps de rétention moyen dans le réacteur de l'étape c) étant de 0,25 à 8 h, préférablement de 0,5 à 2 h.

12. Procédé selon l'une quelconque des revendications précédentes, la quantité d'agent oxydant ajouté dans l'étape b) étant telle que des réactions d'oxydation par voie humide réduisent la valeur de chauffage supérieur (HHV) de la boue de 5 à 49 %, préférablement de 5 à 20 %, plus préférablement de 6 à 15 %.
